# EUROPÄISCHE PATENTSCHRIFT

(11) **EP 0 491 016 B1**
(45) Veröffentlichungstag und Bekanntmachung des Hinweises auf die Patenterteilung: **02.08.1995**
(21) Anmeldenummer: 91911227.6
(22) Anmeldetag: 21.06.1991
(51) Int. Cl.: B30B 9/22

(54) **MEMBRANE EINER ZUM TRENNEN FLÜSSIGER UND FESTER STOFFE BESTIMMTEN PRESSE**
DIAPHRAGM OF A PRESS DESIGNED TO SEPARATE LIQUIDS AND SOLIDS
DIAPHRAGME POUR PRESSES DE SEPARATION DE MATIERES LIQUIDES ET SOLIDES

(30) Priorität: 04.07.1990 CH 2217/90
(43) Veröffentlichungstag der Anmeldung: 24.06.1992
(73) Patentinhaber: BUCHER-GUYER AG Maschinenfabrik, CH-8166 Niederweningen (CH)
(72) Erfinder: HARTMANN, Eduard, CH-5425 Schneisingen (CH)
(86) Internationale Anmeldenummer: CH9100135
(87) Internationale Veröffentlichungsnummer: WO9200847

(56) Entgegenhaltungen:
- FR-A- 2 623 746
- US-A- 3 547 734
- US-A- 3 990 930
- US-A- 4 802 937
- US-A- 4 877 469

## Beschreibung

Die Erfindung betrifft eine Kombination einer Membrane mit einer zum Trennen flüssiger und fester Stoffe bestimmten Presse mit einem Pressbehälter, in dessen Innerem die druckmittelbetätigte, den Pressbehälter in einen Druckraum und in einen Pressraum teilende, aus wenigstens einem, beidseits mit einer Kunststoffolie beschichteten Gewebe aufgebaute Membrane befestigt ist.

Membranen der eingangs bezeichneten Art sind u.a. durch pneumatisch oder hydraulisch betriebene Pressen bekannt geworden (CH-PS 604 841).

Der in dem Druckraum mittels Druckluft oder Wasserdruck auf die Membrane ausgeübte Pressdruck erzeugt eine Drainage in der im Pressraum sich befindenden Maische aus Obst, Trauben, Früchten oder Beeren, wobei der ausgepresste Saft den Pressraum über ein Drainagesystem aus Kanälen oder eine perforierte Behälterwand verlässt.

Die zur Entsaftung der Maische erforderlichen Presszyklen werden üblicherweise in mehreren Zeitintervallen wiederholt, wobei die teilweise ausgepresste Maische dazwischen aufgelockert wird.

Zur Aufnahme des Druckes in dem Druckraum und zur Uebertragung auf die Maische oder andere Güter wird bislang eine Membrane aus einem beidseits kunststoffbeschichteten Gewebe aus Gern oder dgl. verwendet. Zwei Kette und Schuss bildende Fadensysteme sind durch Hoch- und Tiefgänge zu einem Gewebe miteinander verkettet.

An den Kreuzungsstellen umschlingen sich die Fadensysteme teilweise zu Bindungspunkten und lassen die Gerne oder Fäden nicht glatt sondern verkröpft vorkommen.
Diese Verkröpfung ist für eine sog. Strukturdehnung zuständig, durch welche die Verkröpfung bei Zugbeanspruchung des Gewebes quasi glattgezogen wird. Dabei zeigt es sich, dass die Dimensionsstabilität in Diagonalrichtung zu Kette und Schuss des Gewebes unzureichend ist und die Beanspruchung auf die Kunststoffbeschichtung, die hierzu völlig ungeeignet ist, übertragen wird.

Die hohen Zug- und Scherkräfte führen zur Zerstörung der Verbindung zwischen Gewebe und Beschichtung und verursachen blasenartige Hohlräume zwischen den Kunststoffschichten, deren Wände sich nun von dem Gewebe lösen und hernach aus dem Gefüge ausbrechen.
Dieser Zustand macht eine Membrane völlig unbrauchbar, da sie die Funktion der Dichtheit zwischen Druck- und Pressraum nicht mehr erfüllen kann.

Dieser Misstand hat zur Aufgabe der Erfindung geführt, indem eine Membrane der eingangs genannten Art zu schaffen ist, deren Beständigkeit gegen Schäden erheblich verbessert ist.

Erfindungsgemäss wird diese Aufgabe nach dem Kennzeichen des Patentanspruches 1 gelöst.

Dadurch wird es möglich, die Membrane durch entsprechende Massnahmen an den hochbeanspruchten Teilen zu verstärken, sei es durch ein gezieltes Ausrichten der Fadensysteme oder durch ein zusätzliches Anbringen von Fadensystemen nach der Belastungsart und -richtung an der Membrane.

Besonders günstig erweist es sich bei einer Membrane, die in einer zur Achse eines liegenden zylindrischen Behälters parallel verlaufenden Ebene an dem Behältermantel befestigbar ist und wenigstens die halbe Behälterform aufweist, wenn das der Stirnseite des Behälters zugewendete, etwa halbkreisförmige Membranteil aus mehreren segmentähnlichen Abschnitten besteht, sodass jeweils eines der ein Gewebe bildenden Fadensysteme etwa parallel zur radialen Mittelhalbierenden eines segmentähnlichen Abschnittes verläuft. D.h., dass der durch den sich etwa senkrecht zur Behälterwand ausbreitenden Druck, vornehmlich auf Zug belastete, der Stirnseite des Behälters zugewendete Membranteil eine erheblich bessere Verformungsstabilität erfährt. Schon bei zwei segmentähnlichen Abschnitten tritt durch die Ausrichtung der Fadensysteme in abweichenden Richtungen eine spürbare Verbesserung der Verschleisseigenschaften an den halbkreisförmigen Membranteilen ein. Drei segmentähnliche Abschnitte stärken das halbkreisförmige Membranteil weiterhin.

Alternativ kann an der Membrane eine gleichartige Folie befestigt sein, deren Fadensysteme etwa diagonal zu den Fadensystemen der Membrane verlaufen. Die Befestigung der Folie erfolgt nach den bewährten Methoden Schweissen und Nähen.

Dabei ist zu unterscheiden, ob die Folie an der Innen- oder der Aussenseite der Membrane anzubringen ist.

Letztere besteht aus zwei halbkreisförmigen, den Stirnseiten der halben Behälterform zugeordneten Membranteilen, zwischen denen ein etwa die halbe Behältermantelform abdeckender weiterer Membranteil vorgesehen ist. Alle Membranteile bilden gemeinsam einen wannenartigen Balg.

Im Bereich der verstärkten Membrane sind die Folien vorteilhaft in Form von Abschnitten einer Folienbahn ausgebildet, sodass sie an die Belastung der Membrane anpassbar sind. Vornehmlich in den Zonen der Austragselemente und/oder Drainageelemente erweist sich das Aufbringen zusätzlicher Folien als zweckmässig.

Die geringere Längsdehnung der Rette gegenüber dem Schuss eines Gewebes, veranlasst zum Handeln, sodass die Kette, - auch Zettel genannt -, der aufzuschweissenden Folie in der Richtung der grössten Krafteinwirkung an der Membrane angeordnet ist.

Zur Erzielung einer optimalen Ausbildung der Membrane gegen schädliche Auswirkungen aufgrund der hohen Belastungen, kann die Membrane im Bereich des dem Behältermantel eines Pressbehälters zugewendeten Teils mit Abschnitten einer Folie aus einem kunststoffbeschichteten Gewebe über wenigstens einen Teil ihrer Fläche verbunden sein, derart, dass die Kette resp. die Kettfäden oder -garne des Gewebes der Folienabschnitte etwa diagonal zu den Fadensystemen, Kette und Schuss, der Membrane verlaufen.

Nachstehend wird die Erfindung anhand mehrerer in der Zeichchnung dargestellter Ausführungsbeispiele erörtert. Es zeigen:
- Fig. 1: eine Ansicht eines bekannten halbkreisförmigen, der Stirnseite der halben Behälterform zugewendeten Mebranteils,
- Fig. 2: eine Ansicht eines erfindungsgemässen halbkreisförmigen, der Stirnseite der halben Behälterform zugewendeten Membranteils,
- Fig. 3: eine Ansicht einer in einer Ebene ausgelegten Membrane,
- Fig. 4: einen Querschnitt durch eine verstärkte Membrane und
- Fig. 5: eine Ansicht einer in einer Ebene ausgelegten alternativen Membrane.

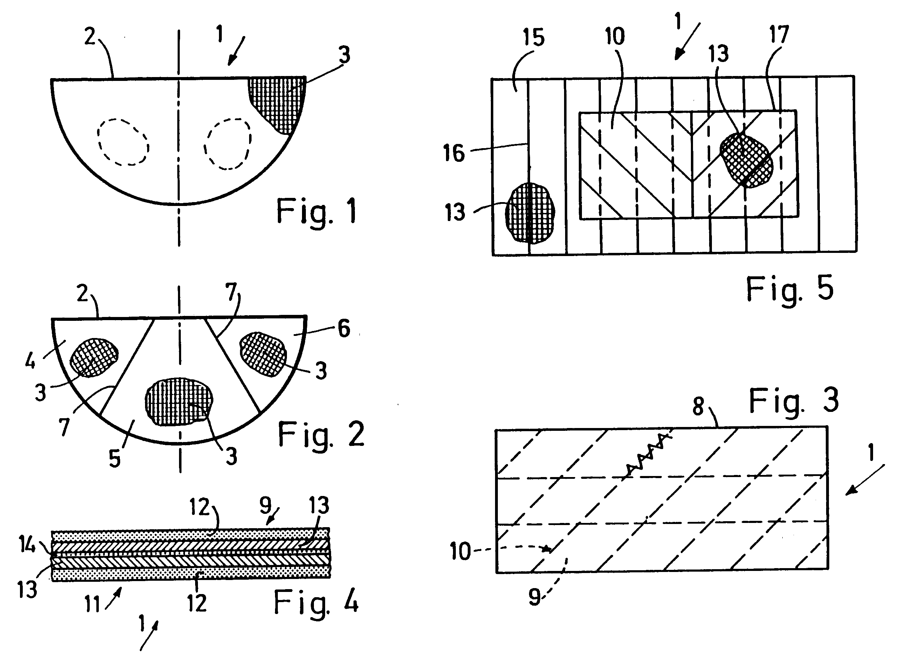

Fig. 1 zeigt an einem etwa halbkreisförmigen Membranteil 2, einen Ausschnitt des beschichteten Gewebes 3 aus Kette und Schuss einer zum Stand der Technik gehörenden Membrane 1.
Aus dieser Darstellung ist zu erkennen, dass die etwa radial wirkende Zug- und Scherbeanspruchung nur gerade in horizontaler und vertikaler Richtung ohne Ueberdehnung der Membrane vom Gewebe aufgenommen werden kann, während die grösseren Segmentbereiche dazwischen diagonal zum Gewebe beansprucht werden und der Beschichtung mangels genügender Dehnbarkeit Schäden zufügen.
Die Kunststoffschichten lösen sich von dem Gewebe in Form von Blasen (siehe gestrichelte Felder), die anschliessend aus der Membrane ausbrechen.
In Erkenntnis dieser Sachlage wäre es wünschbar, dass ein Fadensystem dieses Membranteils radial angeordnete Kettfäden aufweist. Eine solche Anordnungsweise ist fabrikationstechnisch nicht durchführbar, sodass ein nahezu gleichwertiger Kompromiss zu finden ist.

Eine praxisfreudliche Ausführungsform veranschaulicht Fig. 2. Hier wurde das halbkreisförmige Membranteil 2 in mehrere Segmente 4 bis 6 aufgeteilt, wobei zu beachten war, dass die die Segmente 4 bis 6 verbindenden Nähte 7 wegen ihrer Verarbeitung beim Konfektionieren nicht an einer Stelle (Zentrum) zusammenlaufen. Durch die Aufteilung des Membranteils 2 in mehrere Segmente ist es möglich, diese so anzuordnen, dass eines der Fadensysteme, vorzugsweise die Kette, jeweils in Abschnitten etwa radial zum Zentrum ausgerichtet ist. Hierdurch können die Kräfte an dem Membranteil 2 vermehrt in Richtung jeweils eines Fadensystems verlaufen, das annähernd auf die radiale Mittelhalbierende eines Segmentes konzentriert ist.

In Fig. 3 ist eine alternative Ausführungsform einer verstärkten Membrane 1 dargestellt, deren dem halben Mantel eines zylindrischen Pressbehälters zugewendeter Membranteil 8 ebenflächig ausgebreitet vorliegt. Die gestrichelten Linien deuten auf Abschnitte 9 einer Folienbahn 10 aus einem beschichteten Gewebe hin, wie sie beispielsweise über die gesamte Fläche des Membranteils 8 verlegt, danach verschweisst und/oder vernäht werden können. Selbstverständlich sind die Abschnitte 9 auch partiell an den Membranteilen 2 und 8 anbringbar.

Fig. 4 zeigt eine mit einer gleichartigen Folie 11 verstärkte Membrane 1, bzw. Teile davon. Hier ist zu erkennen, dass die Membrane 1 nur einseitig beschichtet 12 und dass auf der gegenüberliegenden Seite des Gewebes 13 eine weitere Folie 11 durch eine Verbindungsschicht 14 aus Kunststoff vorgesehen ist. Die Verbindungsschicht 14 wurde dünn gewählt, damit die Membrane 1 biegsam bleibt und bei ihren Bewegungen keine zu grossen Scherkräfte erfährt.

Fig. 5 vermittelt eine Membrane 1, die aus mehreren, quer zur Achse eines Pressbehälters verlaufenden Folienbahnen 15 besteht. Dadurch kann eine Beschädigung der Membrane, insbesondere durch die beim Auflockern der Maische entstehenden Reibkräfte weitgehend verhindert werden, wobei die Kette des Gewebes 13 der Membrane vorzugsweise in Umfangsrichtung des Pressbehälters verläuft, wodurch eine hohe Formstabilität der Membrane erzielt werden kann. Zur Verstärkung der Membrane, vornehmlich an den Stellen, wo letztere mit einer Austragseinrichtung an der Behälterwand in Kontakt kommt, sind zusätzliche Folien aus einem beschichteten Gewebe, das in einer zum Gewebe der Membran abweichenden Richtung angeordnet ist, vorgesehen. Diese zusätzlichen Folien können als Abschnitte von Folienbahnen zu Flächenelementen 17 ausgebildet und mit der Membrane verbunden sein, wobei wiederum die Ausrichtung der Fadensysteme zu einem multiaxialen Fadengelege zu beachten ist, d.h. die Kette der einzelnen Folien ist quer zur Erstreckung er Austragselemente anzuordnen.

## Patentansprüche

1. Kombination einer Membrane (1) mit einer zum Trennen flüssiger und fester Stoffe bestimmten Presse mit einem Pressbehälter, in dessen Innerem die druckmittelbetätigte, den Pressbehälter in einen Druckraum und in einen Pressraum teilende, aus wenigstens einem, beidseits mit einer Kunststoffolie beschichteten Gewebe (11) aufgebaute Membrane befestigt ist, dadurch gekennzeichnet, dass wenigstens eines der das Gewebe (13) bildenden Fadensysteme zumindest annähernd in Richtung der Hauptbelastungen an der Membrane (1) geordnet ist.

2. Membrane (1) für eine Presse, welche zum Trennen flüssiger und fester Stoffe bestimmt ist und einen Pressbehälter umfasst, in dessen Innerem die druckmittelbetätigte, den Pressbehälter in einen Druckraum und in einen Pressraum teilende, aus wenigstens einem, beidseits mit einer Kunststoffolie beschichteten Gewebe (11) aufgebaute Membrane befestigbar ist, wobei die Membrane etwa in einer zur Achse eines liegenden zylindrischen Pressbehälters parallel verlaufenden Ebene an dem Behältermantel befestigbar ist und deren Form wenigstens annähernd jener des halben Behältermantels entspricht, dadurch gekennzeichnet, dass das der Stirnseite des Behälters zugewendete, etwa halbkreisförmige Membranteil (2) aus mehreren segmentähnlichen Abschnitten (4 bis 6) besteht, derart, dass jeweils eines der ein Gewebe (3) bildenden Fadensysteme etwa parallel zur radialen Mittelhalbierenden eines Abschnittes (4 bis 6) verläuft.

3. Kombination nach Anspruch 1, dadurch gekennzeichnet, dass an der Membrane (1) ein weiteres gleichartiges, mit Kunststoffolie beschichtetes Gewebe (11) befestigt ist, dessen Fadensysteme etwa diagonal zu den Fadensystemen des Gewebes (3, 13) der Membrane (1) verlaufen.

4. Komination nach Anspruch 3, dadurch gekennzeichnet, dass das weitere gleichartige Gewebe (11) an der Innen- oder der Aussenseite der Membrane (1) befestigt ist.

5. Kombination nach einem der Ansprüche 3 und 4, bestehend aus zwei den Stirnseiten des Pressbehälters zugewendeten halbkreisförmigen Membranteilen (2) und einem mit diesen verbundenen, dem etwa halben Behältermantel zugewendeten Membranteil (8).

6. Kombination nach einem der Ansprüche 3 bis 5, dadurch gekennzeichnet, dass die beschichteten Gewebe in Form von Abschnitten (9) einer Gewebebahn (10) ausgebildet sind.

7. Kombination nach einem der Ansprüche 3 bis 6, dadurch gekennzeichnet, dass mehrere Abschnitte (9) von Bahnen (10) von beschichtetem Gewebe nebeneinanderliegend an der Membran (1) befestigt sind.

8. Kombination nach einem der Ansprüche 1 oder 3 bis 7, dadurch gekennzeichnet, dass die Kette des Gewebes (3, 13) der Membrane (1) parallel oder senkrecht zu der Befestigungslinie letzterer am Umfang des Pressbehälters angeordnet ist.

## Claims

1. Combination of a membrane (1) with a press designed to separate liquids and solids with a press container in the interior of which the pressure-medium operated membrane dividing the press container into a pressure chamber and a pressing space and consisting of at least one woven fabric (11) coated on both sides with a plastic film is secured, characterised in that at least one of the thread systems forming the woven fabric (13) is arranged at least approximately in the direction of the main load on the membrane (1).

2. Membrane (1) for a press designed to separate liquids and solids and comprising a press container in the interior of which the pressure-medium operated membrane dividing the press container into a pressure chamber and a pressing space and consisting of at least one woven fabric (11) coated on both sides with a plastic film can be secured, wherein the membrane can be secured to the outer wall of the container substantially in a plane extending parallel to the axis of a horizontal cylindrical press container and its shape corresponds at least approximately to that of half the outer wall of the container, characterised in that the substantially semi-circular membrane part (2) directed towards the end face of the container consists of a plurality of segmental portions (4 to 6) in such a manner that one of the thread systems forming a woven fabric (3) extends substantially parallel to the radial bisecting lines of a portion (4 to 6).

3. Combination according to claim 1, characterised in that a further similar woven fabric (11) coated with plastic film, the thread systems of which extend substantially diagonally to the thread systems of the woven fabric (3, 13) of the membrane (1) is secured to the membrane (1).

4. Combination according to claim 3, characterised in that the further similar woven fabric (11) is secured to the inner or outer face of the membrane (1).

5. Combination according to one of claims 3 and 4, consisting of two semi-circular membrane parts (2) directed towards the end faces of the press container and a membrane part (8) connected thereto and directed towards the substantially half outer wall of the container.

6. Combination according to one of claims 3 to 5, characterised in that the coated woven fabric is in the form of portions (9) of a length (10) of woven fabric.

7. Combination according to one of claims 3 to 6, characterised in that a plurality of portions (9) of lengths (10) of coated woven fabric are secured to the membrane (1) alongside one another.

8. Combination according to one of claims 1 or 3 to 7, characterised in that the warp of the woven fabric (3, 13) of the membrane (1) is arranged parallel or perpendicularly to the line along which the latter is secured to the circumference of the press container.

## Revendications

1. Combinaison d'une membrane (1) et d'un pressoir destiné à séparer des matières liquides et solides, comprenant une cuve de pressurage à l'intérieur de laquelle est fixée une membrane qui est composée d'au moins un tissu (11) recouvert de part et d'autre d'un film plastique, est soumise à l'action d'un fluide sous pression et divise la cuve en un espace de pression et un espace de pressurage, caractérisée en ce qu'au moins l'un des systèmes de fils formant le tissu (13) est dirigé au moins approximativement dans la direction dans laquelle la membrane (1) est principalement sollicitée.

2. Membrane (1) pour un pressoir qui est destiné à séparer des matières liquides et solides et comprend une cuve de pressurage à l'intérieur de laquelle peut être fixée la membrane qui est composée d'au moins un tissu (11) recouvert de part et d'autre d'un film plastique, est soumise à l'action d'un fluide sous pression et divise la cuve de pressurage en un espace de pression et un espace de pressurage, sachant que la membrane peut être fixée sur l'enveloppe de la cuve approximativement dans un plan s'étendant parallèlement à l'axe d'une cuve cylindrique horizontale et que sa forme correspond au moins approximativement à celle de la moitié de l'enveloppe de la cuve, caractérisée en ce que la partie de membrane (2) approximativement semi-circulaire qui est tournée vers la face frontale de la cuve est composée de plusieurs parties semblables à des segments (4 à 6), et ce, de manière à ce que l'un des systèmes de fils formant un tissu (3) s'étende chaque fois approximativement parallèlement à la médiane radiale d'une partie (4 à 6).

3. Combinaison selon la revendication 1, caractérisée en ce que, sur la membrane (1), est fixé un autre tissu (11) de même nature recouvert d'un film plastique, dont les systèmes de fils s'étendent approximativement en diagonale par rapport aux systèmes de fils du tissu (3, 13) de la membrane (1).

4. Combinaison selon la revendication 3, caractérisée en ce que l'autre tissu (11) de même nature est fixé sur la face intérieure ou extérieure de la membrane (1).

5. Combinaison selon l'une des revendications 3 et 4, composée de deux portions de membrane (2) semi-circulaires tournées vers la face frontale de la cuve de pressurage et d'une partie de membrane (8) reliée aux précédentes et tournée vers la demi-enveloppe de la cuve.

6. Combinaison selon l'une des revendications 3 à 5, caractérisée en ce que les tissus enduits sont réalisés sous la forme de portions (9) d'une bande de tissu (10).

7. Combinaison selon l'une des revendications 3 à 6, caractérisée en ce que plusieurs portions (9) de bandes (10) de tissu enduit sont fixées côte à côte sur la membrane (1).

8. Combinaison selon l'une des revendications 1 ou 3 à 7, caractérisée en ce que la chaîne du tissu (3, 13) de la membrane (1) est disposée parallèlement ou perpendiculairement à la ligne de fixation de cette dernière sur le pourtour de la cuve de pressurage.
